# EUROPÄISCHE PATENTSCHRIFT

(11) **EP 4 109 432 B1**
(45) Veröffentlichungstag und Bekanntmachung des Hinweises auf die Patenterteilung: **27.05.2026**
(21) Anmeldenummer: 22177069.6
(22) Anmeldetag: 02.06.2022
(51) Int. Cl.: G08G 1/16, B60W 30/12, H04W 4/44, H04W 4/46, G01C 21/36

(54) **VERFAHREN ZUR ZUORDNUNG DES VON EINEM FAHRZEUG AKTUELL BEFAHRENEN FAHRSTREIFENS**
METHOD FOR ALLOCATING THE LANE CURRENTLY BEING DRIVEN ON BY A VEHICLE
PROCÉDÉ D'AFFECTATION DE LA VOIE DE CIRCULATION ACTUELLEMENT PARCOURUE AU MOMENT PRÉSENT PAR UN VÉHICULE

(30) Priorität: 21.06.2021 DE 102021206355
(43) Veröffentlichungstag der Anmeldung: 28.12.2022
(73) Patentinhaber: VOLKSWAGEN AG, 38440 Wolfsburg (DE)
(72) Erfinder: Gläser, Stefan, 38104 Braunschweig (DE); Reimann, Daniel, 38100 Braunschweig (DE); Pfadler, Andreas, 13357 Berlin (DE); Kwasny, Julia, 38448 Wolfsburg (DE); Klomp, Sven, 31311 Uetze / Dollbergen (DE); Kleinau, Sandra, 38531 Rötgesbüttel (DE)

(56) Entgegenhaltungen:
- DE-A1- 102013 213 361
- DE-A1- 102015 001 386
- US-A1- 2020 207 343
- "Intelligent Transport Systems (ITS); Vehicular Communications; Basic Set of Applications; Part 2: Specification of Cooperative Awareness Basic Service", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG1, no. V1.1.1, 1 April 2010 (2010-04-01), XP014046365

## Beschreibung

Die Erfindung betrifft ein Verfahren zur Zuordnung des von einem Fahrzeug aktuell befahrenen Fahrstreifens, wobei Eingangsgrößen mindestens einer Datenquelle zur Bestimmung des aktuell befahrenen Fahrstreifens erfasst werden, wobei mindestens eine Datenquelle erfasste Signale einer Umfeldsensorik des Fahrzeugs umfasst.

Für Fahrerinformationssysteme beziehungsweise Fahrassistenzsysteme, insbesondere in Kraftfahrzeugen, wird zunehmend die korrekte Zuordnung des eigenen wie auch der umgebenden Fahrzeuge zu dem aktuell befahrenen Fahrstreifen wichtig. Dazu ist es notwendig, dass dem Navigationssystem Informationen dahingehend vorliegen, auf welchem Fahrstreifen sich das Fahrzeug befindet. Insbesondere bei komplexen Autobahnkreuzen ist es wichtig, dass dem Fahrer genaue und zuverlässige Fahranweisungen gegeben werden.

Auch Assistenzfunktionen wie das Halten von Abständen beziehungsweise das Folgefahren in einem bestimmten Abstand können erheblich von einer genauen Fahrstreifenzuordnung des eigenen Fahrzeugs sowie der Zuordnung anderer Verkehrsteilnehmer profitieren. Da die Winkelauflösung, beispielsweise vom Radar, begrenzt ist, kann nicht immer zuverlässig erkannt werden, ob das Vorderfahrzeug in der eigenen Spur oder der Nachbarspur fährt. Dies führt zum Beispiel dazu, dass das eigene Fahrzeug, aufgrund der eingeschalteten Assistenzfunktion, abbremst, da ein weiteres Fahrzeug auf einer Autobahnabfahrt abbremst, obwohl die eigene Spur frei ist. Nicht zuletzt benötigen auch Sicherheitsfunktionen wie beispielsweise eine "Blind Spot Detection" genaue Spurinformationen um zu entscheiden, ob eine Warnung notwendig ist.

Für eine genaue Fahrstreifenerkennung sind im Stand der Technik unterschiedliche Lösungsansätze bekannt. Darunter fällt beispielsweise die Nutzung einer hochaufgelösten Karte in Verbindung mit einer hochgenauen Kameralokalisierung. Daneben werden unterschiedliche Sensoren, wie Gyroskope und Radsensoren, zum "Map Matching" verwendet. Ferner ist auch der "Optical Lane Matcher" bekannt.

Die DE 10 2015 209 467 A1 zeigt beispielsweise ein Verfahren zur Schätzung von Fahrstreifen, welches in einem Fahrassistenzsystem zum Einsatz kommt. Die Fahrstreifen werden durch Auswertung von Eingangsdaten unterschiedlicher Sensoren geschätzt.

Die DE 10 2013 213 361 A1 zeigt ein Verfahren für eine Spurführung für ein Fahrzeug, wobei mittels Schwarmdaten eine Zone mit einer hohen Präsenz von Fahrzeugen als eine Fahrspur erkannt wird.

Map Matching beruht zumeist auf GNSS, Karten, Radsensoren, Gyroskop und Dead-Reckoning-Algorithmen. Typischerweise findet hier die Zuordnung zwar fahrtrichtungsgenau, nicht aber immer fahrstreifengenau statt. Die fahrstreifengenaue Positionierung des eigenen Fahrzeugs ist mit hochgenauen Karten und hochgenauer Ortung realisierbar. Beides ist jedoch nicht immer vorhanden. Die oben zuvor genannten Lösungen eignen sich für heutige Kundenfunktionen, sind aber bezüglich der Fahrstreifengenauigkeit, aufgrund von Verfügbarkeit und/oder Genauigkeit, insbesondere für neue Kundenfunktionen, fehleranfällig. Außerdem sind die Zusatzkosten im Fahrzeug bei manchen Verfahren erheblich.

Der Erfindung liegt nun die Aufgabe zugrunde, ein Verfahren anzugeben, bei dem die Möglichkeit einer eindeutigen Zuordnung des vom Fahrzeug befahrenen Fahrstreifens verbessert wird, wobei gleichzeitig auf eine Kosteneffizienz geachtet wird.

Diese Aufgabe ist bei der vorliegenden Erfindung durch die Merkmale des Kennzeichnungsteils des Patentanspruchs 1 zunächst dadurch gelöst, dass mindestens eine Datenquelle eine C2X-Kommunikation umfasst.

Der Grundgedanke dieses Ansatzes besteht darin, basierend auf C2X-Kommunikation sowie bereits verbauter Umfeldsensorik, wie zum Beispiel einem Radar, Lidar und/oder einer oder mehreren Kameras zusätzliche Information zur zuverlässigeren Zuordnung des eigenen Fahrzeugs zum aktuell befahrenen Fahrstreifen zu liefern.

Moderne Fahrzeuge sind häufig mit C2X-Funkmodulen ausgestattet, um standardisierte Nachrichten untereinander und mit der Infrastruktur auszutauschen. Beispiele dafür sind die CAM (Cooperative Awareness Message), oder DENM (Decentralized Environmental Notification Message) des ETSI Standards für C2X-Kommunikation. Erstere Nachricht enthält Position und Geschwindigkeit des aussendenden Fahrzeugs.

Weitere bevorzugte Ausgestaltungen der Erfindung ergeben sich aus den übrigen, in den Unteransprüchen genannten Merkmalen.

Erfindungsgemäß ist vorgesehen, dass das Fahrzeug mittels C2X-Kommunikation mit mindestens einem weiteren Fahrzeug kommuniziert, dass Informationen über die Position des Fahrzeugs an das weitere Fahrzeug übertragen werden und dass Informationen über die Position des weiteren Fahrzeugs an das Fahrzeug übertragen werden. Durch die Kommunikation von Fahrzeugen untereinander können die Fahrzeuge sich untereinander ihre Positionen mitteilen. Durch Verknüpfung mit der Umfeldsensorik wird die Position des Fahrzeugs eindeutiger bestimmt.

Zusätzlich ist bei einer weiteren Ausgestaltung des erfindungsgemäßen Verfahrens vorgesehen, dass das Fahrzeug mittels C2X-Kommunikation mit der Infrastruktur kommuniziert. Denkbar ist beispielsweise, dass das Fahrzeug mit einer Kamera und einer entsprechenden Auswerteeinrichtung kommuniziert, die im Bereich der Fahrbahn positioniert ist. Eine erhöht angeordnete Kamera bietet zusätzliche Blickwinkel, um weitere Fahrzeuge zu identifizieren, die möglicherweise durch Folgefahrzeuge verdeckt werden. Als Voraussetzung wird angenommen, dass ein vorausfahrendes Fahrzeug durch das folgende Fahrzeug vollständig verdeckt wird. Das folgende Fahrzeug sendet eine C2X-Nachricht an die Infrastruktur. Falls es sich bei der Infrastruktur beispielsweise um eine Kamera handelt, kann durch den Neigungswinkel und die Auflösung der Kamera sowie durch die Ermittlung der Höhe des folgenden Fahrzeugs die Fläche vor dem folgenden Fahrzeug berechnet werden. Auf diese Weise kann die Position des vorausfahrenden Fahrzeugs sowohl in longitudinaler als auch in lateraler Position auf einen bestimmten Bereich, beispielsweise einen Fahrstreifen, eingegrenzt und damit genauer bestimmt werden.

Um die Durchführung des Verfahrens zu vereinfachen, ist bei einer weiteren Ausgestaltung der Erfindung vorgesehen, dass die Umfeldsensorik mittels Radar und/oder Ultraschall betrieben wird. Radar ist eine funkgestützte Erfassung und Abstandsmessung, wobei der entsprechende Radarsensor ein strahlbasierter Sensor ist und eingesetzt wird, um Objekte, zum Beispiel andere Fahrzeuge und Fußgänger, zu erfassen und deren Abstand zum Fahrzeug sowie deren Relativgeschwindigkeiten zu messen. Dazu werden elektromagnetische Wellen ausgesendet. Die von den Objekten reflektierten elektromagnetischen Wellen werden empfangen und ausgewertet. Die gemessenen Werte werden in elektrische Signale umgerechnet, die in speziellen Steuergeräten ausgewertet werden (vgl. http://www.mein-autolexikon.de/fahrerassistenzsysteme/radarsensor.html).

Ultraschallsensoren sind ebenfalls strahlbasierte Sensoren. Sie senden und empfangen Schallwellen, deren Frequenzen oberhalb des vom menschlichen Gehör wahrnehmbaren Bereichs, über 16 kHz, liegen. Diese Schallwellen werden meist von sogenannten Piezoaktuatoren über eine Membran gesendet. Die Schallwellen breiten sich in der umgebenden Luft aus und werden von Hindernissen reflektiert. Die reflektierten Echosignale werden von den Sensoren registriert und von einem zentralen Steuergerät ausgewertet. Aus der Laufzeit, also der Zeit, die das Echosignal benötigt, um beim Sender anzukommen, wird die Entfernung zum entsprechenden Objekt berechnet (vgl. https://www.mein-autolexikon.de/fahrerassistenzsysteme/ultraschallsensor. pdf).

Bei einer weiteren Ausgestaltung des erfindungsgemäßen Verfahrens ist vorgesehen, dass die Umfeldsensorik eine Seitenbereichsensorik umfasst, und dass mittels der Seitenbereichsensorik Informationen über die laterale Position des Fahrzeugs auf der Fahrbahn ermittelt werden, wobei aus der lateralen Position Rückschlüsse auf den aktuell befahrenen Fahrstreifen ermöglicht werden. So ist beispielsweise denkbar dass das Fahrzeug anhand von detektierten weiteren Fahrzeugen, die sich neben dem Fahrzeug befinden, Rückschlüsse auf seine eigene laterale Position, insbesondere den befahrenen Fahrstreifen, ziehen kann. Wenn beispielsweise links und rechts neben dem Fahrzeug weitere Fahrzeuge fahren und die Fahrzeuge miteinander kommunizieren, können sie sich gegenseitig einander identifizieren und so feststellen, dass ein weiteres Fahrzeug rechts vom Fahrzeug fährt. Mit dieser Information können die Fahrzeuge ihre Position bestimmen. Wenn beispielsweise ein weiteres Fahrzeug links vom Fahrzeug detektiert wird, wird geschlussfolgert, dass sich das Fahrzeug nicht auf dem linken Fahrstreifen befinden kann. Entsprechend kann auch geschlussfolgert werden, dass sich das Fahrzeug nicht auf dem rechten Fahrstreifen befindet, wenn rechts neben dem Fahrzeug ein weiteres Fahrzeug detektiert wird.

Um die Genauigkeit zur Bestimmung des befahrenen Fahrstreifens weiter zu verbessern, ist bei dem erfindungsgemäßen Verfahrens vorgesehen, dass mindestens eine Datenquelle Informationen über die Straßentopologie umfasst und dass durch die Informationen über die Straßentopologie die Anzahl der Fahrstreifen mindestens des aktuell befahrenen Straßenabschnitts ermittelt wird.

Erfindungsgemäß ist vorgesehen, dass Signale zum Anzeigen der Fahrtrichtung von weiteren Fahrzeugen im Umfeld des Fahrzeugs erfasst werden und dass durch Kenntnis der Straßentopologie in Verbindung mit den erfassten Signalen zum Anzeigen der Fahrtrichtung Rückschlüsse auf die Position des Fahrzeugs ermöglicht werden. Die Kenntnis der Straßentopologie, konkret das Wissen über die Anzahl von Abbiegefahrstreifen, hilft zusätzlich bei der Fahrstreifenzuordnung. Ein links blinkendes Fahrzeug, das sich kurz vor der Kreuzung befindet, befindet sich mit sehr großer Wahrscheinlichkeit auf einem Linksabbiegerstreifen. Ist dessen laterale Position so eindeutig identifizierbar, werden durch relative Positionierung der umgebenden Fahrzeuge auch deren Fahrstreifen absolut zugeordnet.

Bei einer weiteren Ausgestaltung des erfindungsgemäßen Verfahrens ist vorgesehen, dass die Umfeldsensorik eine Frontsensorik umfasst und dass durch die Frontsensorik die Position von vorausfahrenden Fahrzeugen ermittelt wird. Mit Hilfe der Frontsensorik ist eine Fahrstreifenzuordnung umsetzbar. Wenn weitere Fahrzeuge vor dem Fahrzeug fahren, kann, insbesondere bei Kenntnis der Straßentopologie, anhand der detektierten, vorausfahrenden Fahrzeugen die eigene, laterale Position des Fahrzeugs auf der Fahrbahn bestimmt werden. Für den Fall, dass die Fahrzeuge miteinander mittels C2X kommunizieren, kann das Fahrzeug den vorausfahrenden Fahrzeugen auch deren Position mitteilen. Ebenso können die vorausfahrenden Fahrzeuge bei Kenntnis ihrer eigenen, lateralen Position auf der Fahrbahn, die laterale Position des Folgefahrzeugs bestimmen und dem Folgefahrzeug beziehungsweise dem Fahrzeug diese Position via C2X mitteilen.

Zusätzlich oder alternativ ist bei einer weiteren Ausgestaltung der Erfindung vorgesehen, dass die Umfeldsensorik eine Hecksensorik umfasst und dass durch die Hecksensorik die Position von Folgefahrzeugen ermittelt wird. Analog zur Frontsensorik wird mit Hilfe der Hecksensorik ebenfalls eine Fahrstreifenzuordnung umsetzbar. Wenn weitere Fahrzeuge hinter dem Fahrzeug fahren, kann, insbesondere bei Kenntnis der Straßentopologie, anhand der detektierten Folgefahrzeuge die laterale Position des Fahrzeugs auf der Fahrbahn bestimmt werden. Für den Fall, dass die Fahrzeuge miteinander mittels C2X kommunizieren, kann das Fahrzeug den Folgefahrzeugen auch deren Position mitteilen. Ebenso können die Folgefahrzeuge bei Kenntnis ihrer eigenen, lateralen Position auf der Fahrbahn, die laterale Position des vorausfahrenden Fahrzeugs bestimmen und dem vorausfahrenden Fahrzeug beziehungsweise dem Fahrzeug diese Position via C2X mitteilen.

Bei einer bevorzugten Ausgestaltung des erfindungsgemäßen Verfahrens ist vorgesehen, dass die Position einer Leitplanke mittels der Erfassung der Rückstrahlcharakteristik von Objekten ermittelt wird und dass in Abhängigkeit der Position der Leitplanke die laterale Position des Fahrzeugs auf der Fahrbahn bestimmt wird. Wenn die Leitplanke als Objekt klassifiziert wird, kann, aufgrund des lateralen Offsets der Position des Fahrzeugs zur Leitplanke, der aktuell befahrene Fahrstreifen ermittelt werden. Die Klassifizierung als "Leitplanke" wird durch die Rückstrahlungscharakteristik von Objekten ermittelt, beispielsweise "radar cross section".

Die verschiedenen in dieser Anmeldung genannten Ausführungsformen der Erfindung sind, sofern im Einzelfall nicht anders ausgeführt, mit Vorteil miteinander kombinierbar. Der Schutzumfang der Erfindung wird ausschließlich durch die nachstehenden Patentansprüche bestimmt.

Die Erfindung wird nachfolgend in Ausführungsbeispielen anhand der zugehörigen Zeichnungen erläutert. Es zeigen:
- Figur 1: eine schematische Darstellung der Durchführung eines Ausführungsbeispiels eines erfindungsgemäßen Verfahrens auf einer vierspurigen Autobahn,
- Figur 2: eine schematische Darstellung eines weiteren Ausführungsbeispiels eines erfindungsgemäßen Verfahrens und
- Figur 3: eine schematische Darstellung der Kommunikation zwischen der Infrastruktur und mindestens einem Fahrzeug.

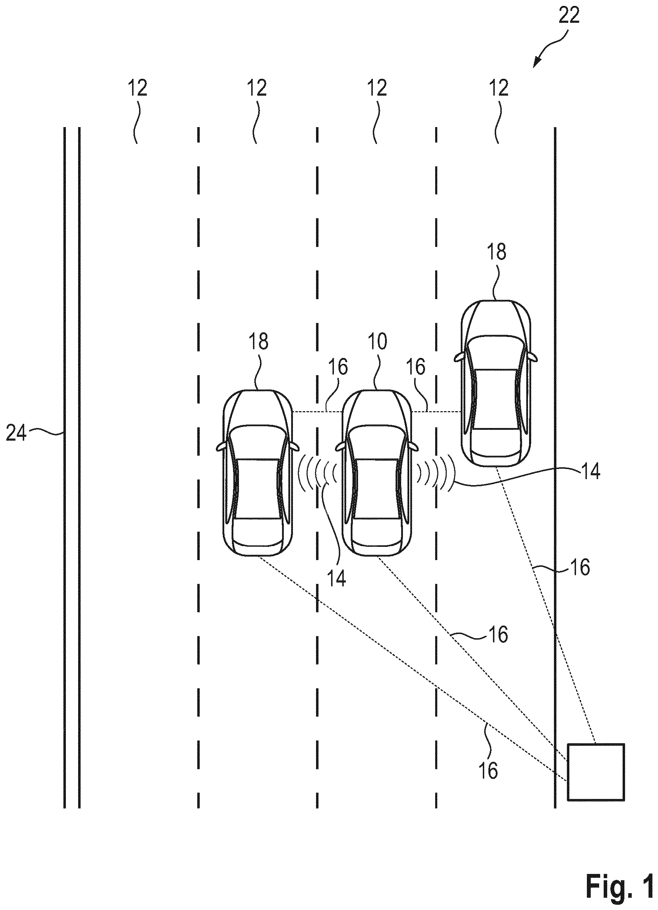

Figur 1 zeigt ein Fahrzeug 10, das auf einem Fahrstreifen 12 einer Autobahn fährt. Mittels einer Umfeldsensorik 14 und einer C2X-Kommunikation 16 ist das Fahrzeug 10 in der Lage, weitere Fahrzeuge 18 zu erfassen und mit ihnen zu kommunizieren. Daneben können auch Elemente der Infrastruktur 20, beispielsweise eine Kamera, die am Rand der Fahrbahn 22 angeordnet ist, mit dem Fahrzeug über die C2X-Kommunikation 16 kommunizieren. In diesem Ausführungsbeispiel umfasst die Umfeldsensorik 14 eine Seitenbereichsensorik. Auf Grundlage der erfassten Signale der Umfeldsensorik 14 sowie der C2X-Kommunikation 16 werden Rückschlüsse auf den aktuell befahrenen Fahrstreifen 12 des Fahrzeugs 10 gezogen.

Mit Hilfe der der Seitenbereichsensorik 14 können Informationen über die laterale Position des Fahrzeugs 10 auf der Fahrbahn 22 ermittelt werden, wobei aus der lateralen Position Rückschlüsse auf den aktuell befahrenen Fahrstreifen 12 ermöglicht werden. In Figur 1 ist zu erkennen, dass neben dem Fahrzeug 10 weitere Fahrzeuge 18 auf den Fahrstreifen 12 neben dem vom Fahrzeug 10 befahrenen Fahrstreifen 12 fahren. Durch die C2X-Kommunikation 16 des Fahrzeugs 10 mit den weiteren Fahrzeugen 18 miteinander, können sie sich gegenseitig einander identifizieren und so feststellen, dass ein weiteres Fahrzeug 18 beispielsweise rechts vom Fahrzeug 10 fährt.

Mit dieser Information können die Fahrzeuge ihre Position bestimmen. Das Prinzip des Verfahrens beruht auf der logischen Schlussfolgerung, dass das Fahrzeug 10 detektiert, dass ein weiteres Fahrzeug 18 beispielsweise links neben dem Fahrzeug 10 fährt und daraus schlussfolgert, dass das Fahrzeug 10 nicht auf dem linken Fahrstreifen 12 fahren kann. Die Kenntnis des befahrenen Fahrstreifens 12 kann ebenfalls an weitere Fahrzeuge 18 übertragen werden beziehungsweise übertragen weitere Fahrzeuge 18 die Kenntnis des von ihnen befahrenen Fahrstreifens 12 an das Fahrzeug 10. Daraus können die Fahrzeuge untereinander schlussfolgern, auf welchem Fahrstreifen 12 sie sich befinden. Dabei ist als zusätzliche Datenquelle die Kenntnis der Straßentopologie und entsprechend die tatsächliche Anzahl der Fahrstreifen 12 vorgesehen.

Mit Hilfe der Seitenbereichsensorik der Umfeldsensorik 14 ist darüber hinaus vorgesehen, dass die Position einer Leitplanke 24 mittels der Erfassung der Rückstrahlcharakteristik von Objekten ermittelt wird und dass in Abhängigkeit der Position der Leitplanke 24 die laterale Position des Fahrzeugs 10 auf der Fahrbahn bestimmt wird. Wenn die Leitplanke 24 als Objekt klassifiziert wird, kann, aufgrund des lateralen Offsets der Position des Fahrzeugs 10 zur Leitplanke 24, der aktuell befahrene Fahrstreifen 12 ermittelt werden. Die Klassifizierung als Leitplanke 24 wird durch die Rückstrahlungscharakteristik von Objekten ermittelt. Dazu wird in diesem Ausführungsbeispiel die Seitenbereichsensorik mittels Radar realisiert.

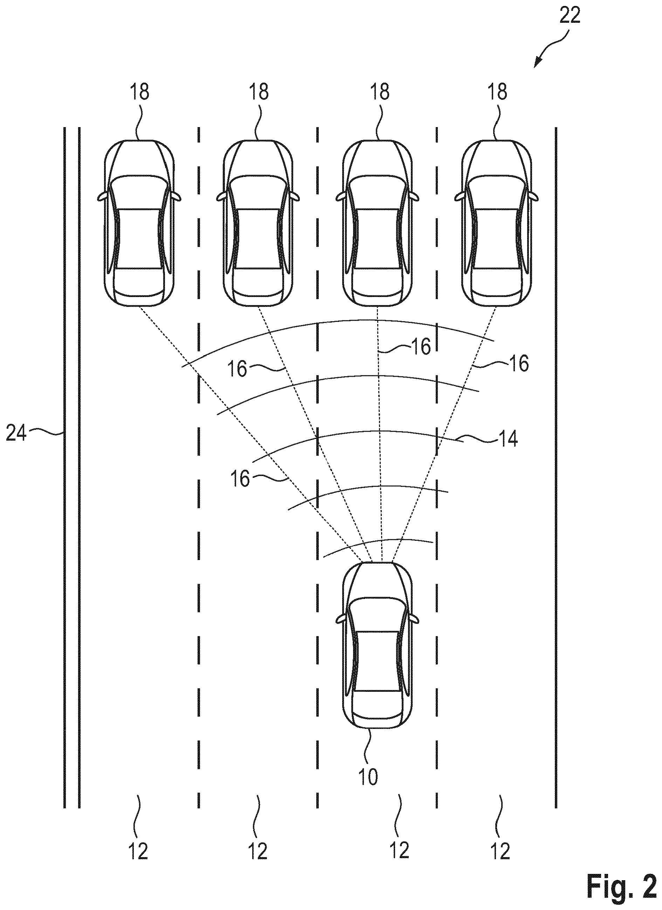

Figur 2 zeigt ein Ausführungsbeispiel der Durchführung eines Verfahrens zur Bestimmung des aktuell befahrenen Fahrstreifens 12. Das Fahrzeug 10 verfügt neben der Möglichkeit der C2X-Kommunikation über eine Frontsensorik als Teil der Umfeldsensorik 14. Mittels der Frontsensorik können vorausfahrende weitere Fahrzeuge 18 erfasst werden. Wenn weitere Fahrzeuge 18 vor dem Fahrzeug 10 fahren, insbesondere bei Kenntnis der Straßentopologie, kann das Fahrzeug 10 anhand der detektierten, vorausfahrenden weiteren Fahrzeuge 18 seine eigene, laterale Position auf der Fahrbahn 22 bestimmen. Da die Fahrzeuge mittels C2X-Kommunikation kommunizieren, kann das Fahrzeug 10 den vorausfahrenden weiteren Fahrzeugen 18 auch deren Position mitteilen. Ebenso können die vorausfahrenden weiteren Fahrzeuge 18 bei Kenntnis ihrer eigenen, lateralen Position auf der Fahrbahn, die laterale Position des Folgefahrzeugs, also des Fahrzeugs 10, bestimmen und dem Folgefahrzeug beziehungsweise dem Fahrzeug 10 diese Position via C2X-Kommunikation 16 mitteilen.

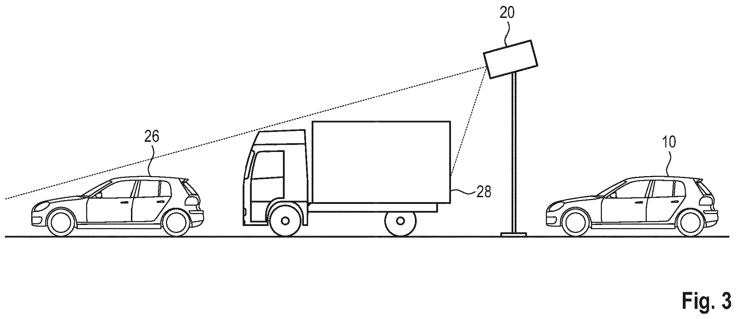

Figur 3 zeigt die vorteilhafte C2X-Kommunikation 16 des Fahrzeugs 10 mit der Infrastruktur 20 in Form einer Kamera. Eine erhöht angeordnete Kamera bietet zusätzliche Blickwinkel, um weitere Fahrzeuge 18 zu identifizieren, die möglicherweise durch Folgefahrzeuge verdeckt werden. Als Voraussetzung wird angenommen, dass ein vorausfahrendes Fahrzeug 26, durch das folgende Fahrzeug 28 vollständig verdeckt wird. Das vorausfahrende Fahrzeug 26 sendet eine C2X-Nachricht an die Infrastruktur 20. Falls es sich bei der Infrastruktur 20 beispielsweise um eine Kamera handelt, kann durch den Neigungswinkel und die Auflösung der Kamera sowie durch die Ermittlung der Höhe des folgenden Fahrzeugs 28 die Fläche vor dem folgenden Fahrzeug 28 berechnet werden. Auf diese Weise kann die Position des vorausfahrenden Fahrzeugs 26 sowohl in longitudinaler als auch in lateraler Position auf einen bestimmten Bereich, beispielsweise einen Fahrstreifen 12, eingegrenzt und damit genauer bestimmt werden.

### Bezugszeichenliste

- 10: Fahrzeug
- 12: Fahrstreifen
- 14: Umfeldsensorik
- 16: C2X-Kommunikation
- 18: weiteres Fahrzeug
- 20: Infrastruktur
- 22: Fahrbahn
- 24: Leitplanke
- 26: vorausfahrendes Fahrzeug
- 28: folgendes Fahrzeug

## Patentansprüche

1. Verfahren zur Zuordnung des von einem Fahrzeug (10) aktuell befahrenen Fahrstreifens (12), wobei Eingangsgrößen verschiedener Datenquellen zur Bestimmung des aktuell befahrenen Fahrstreifens (12) erfasst werden, wobei mindestens eine Datenquelle erfasste Signale einer Umfeldsensorik (14) des Fahrzeugs umfasst, wobei mindestens eine Datenquelle eine C2X-Kommunikation (16) umfasst,
wobei das Fahrzeug (10) mittels C2X-Kommunikation mit mindestens einem weiteren Fahrzeug (18) kommuniziert, wobei Informationen über die Position des Fahrzeugs (10) an das mindestens eine weitere Fahrzeug (18) übertragen werden und wobei Informationen über die Position des mindestens einen weiteren Fahrzeugs (18) an das Fahrzeug (10) übertragen werden, wobei eine Verknüpfung der C2X-Kommunikation und der Umfeldsensorik zur genauen Positionsbestimmung des Fahrzeugs (10) erfolgt,
wobei mindestens eine Datenquelle Informationen über die Straßentopologie umfasst und durch die Informationen über die Straßentopologie die Anzahl der Fahrstreifen (12) mindestens des aktuell befahrenen Straßenabschnitts ermittelt wird,
**dadurch gekennzeichnet, dass**
Signale zum Anzeigen der Fahrtrichtung von dem mindestens einen weiteren Fahrzeug (18) im Umfeld des Fahrzeugs (10), durch die Umfeldsensorik (14), erfasst werden und dass durch Kenntnis der Straßentopologie in Verbindung mit den erfassten Signalen zum Anzeigen der Fahrtrichtung die Position des Fahrzeugs (10) ermittelt wird, wobei mit Kenntnis der Anzahl von Abbiegefahrstreifen, aufgrund der Kenntnis der Straßentopologie, und der Erfassung der Signale zum Anzeigen der Fahrtrichtung des mindestens einen weiteren Fahrzeugs (18) im Umfeld des Fahrzeugs (10), angenommen wird, dass ein weiteres Fahrzeug (18), das die Anzeige der Fahrtrichtung signalisiert und sich kurz vor einer Kreuzung befindet, abbiegen wird, sodass die laterale Position des mindestens einen weiteren Fahrzeugs (18) eindeutig identifiziert wird und durch relative Positionierung von umgebenden Fahrzeugen auch deren Fahrstreifen absolut zugeordnet werden.

2. Verfahren nach Anspruch 1, wobei das Fahrzeug (10) mittels C2X-Kommunikation mit einer Infrastruktur (20) kommuniziert.

3. Verfahren nach einem der Ansprüche 1 oder 2, wobei die Umfeldsensorik (14) mittels Radar und/oder Ultraschall betrieben wird.

4. Verfahren nach einem der Ansprüche 1 bis 3, wobei die Umfeldsensorik (14) eine Seitenbereichsensorik umfasst und mittels der Seitenbereichssensorik Informationen über die laterale Position des Fahrzeugs (10) auf der Fahrbahn (22) ermittelt werden, wobei aus der lateralen Position der aktuell befahrene Fahrstreifen (12) ermittelt wird.

5. Verfahren nach einem der Ansprüche 1 bis 4, wobei die Umfeldsensorik (14) eine Frontsensorik umfasst und durch die Frontsensorik die Position von vorausfahrenden weiteren Fahrzeugen (18) ermittelt wird.

6. Verfahren nach einem der Ansprüche 1 bis 5, wobei die Umfeldsensorik (14) eine Hecksensorik umfasst und durch die Hecksensorik die Position von Folgefahrzeugen ermittelt wird.

7. Verfahren nach einem der Ansprüche 1 bis 6, wobei die Position einer Leitplanke (24) mittels der Erfassung der Rückstrahlcharakteristik von Objekten ermittelt wird und in Abhängigkeit der Position der Leitplanke (24) die laterale Position des Fahrzeugs (10) auf der Fahrbahn (22) bestimmt wird.

## Claims

1. Method for assigning the lane (12) currently being driven on by a vehicle (10), input variables from various data sources being detected in order to determine the lane (12) currently being driven on, at least one data source including signals detected by an environment sensor system (14) of the vehicle, at least one data source including C2X communication (16),
the vehicle (10) communicating with at least one other vehicle (18) by means of C2X communication, information about the position of the vehicle (10) being transmitted to the at least one other vehicle (18) and information about the position of the at least one other vehicle (18) being transmitted to the vehicle (10), the C2X communication and the environment sensor system being linked for the precise determination of the position of the vehicle (10), at least one data source including information about the road topology and the number of lanes (12) of at least the part of the road currently being driven on being determined using the information about the road topology, **characterized in that** signals for indicating the direction of travel of the at least one other vehicle (18) in the environment of the vehicle (10) are detected using the environment sensor system (14), and **in that** the position of the vehicle (10) is determined using knowledge of the road topology in conjunction with the detected signals for indicating the direction of travel, it being assumed, using knowledge of the number of turning lanes, based on knowledge of the road topology, and the detection of the signals for indicating the direction of travel of the at least one other vehicle (18) in the environment of the vehicle (10), that another vehicle (18), which is signaling the indicator for the direction of travel and is located just before an intersection, will turn, so that the lateral position of the at least one other vehicle (18) is uniquely identified and, using relative positioning of surrounding vehicles, the lanes of the surrounding vehicles are also absolutely assigned.

2. Method according to claim 1, wherein the vehicle (10) communicates with an infrastructure (20) by means of C2X communication.

3. Method according to either claim 1 or claim 2, wherein the environment sensor system (14) is operated by means of radar and/or ultrasound.

4. Method according to any of claims 1 to 3, wherein the environment sensor system (14) comprises a side region sensor system and information about the lateral position of the vehicle (10) on the roadway (22) is determined by means of the side region sensor system, wherein the lane (12) currently being driven on is determined from the lateral position.

5. Method according to any of claims 1 to 4, wherein the environment sensor system (14) comprises a front sensor system and the position of other vehicles (18) driving ahead is determined using the front sensor system.

6. Method according to any of claims 1 to 5, wherein the environment sensor system (14) comprises a rear sensor system and the position of following vehicles is determined using the rear sensor system.

7. Method according to any of claims 1 to 6, wherein the position of a guardrail (24) is determined by means of detecting the retroreflective characteristics of objects, and the lateral position of the vehicle (10) on the roadway (22) is determined depending on the position of the guardrail (24).

## Revendications

1. Procédé pour l'attribution de la voie de circulation (12) actuellement empruntée par un véhicule (10), dans lequel des grandeurs d'entrée de différentes sources de données sont détectées pour déterminer la voie de circulation (12) actuellement empruntée, dans lequel au moins une source de données comprend des signaux détectés d'une technologie de capteur d'environnement (14) du véhicule, dans lequel au moins une source de données comprend une
communication C2X (16),
dans lequel le véhicule (10) communique avec au moins un autre véhicule (18) au moyen d'une communication C2X, dans lequel des informations concernant la position du véhicule (10) sont transmises à l'au moins un autre véhicule (18) et dans lequel des informations concernant la position de l'au moins un autre véhicule (18) sont transmises au véhicule (10), dans lequel une combinaison de la communication C2X et de la technologie de capteur d'environnement est effectuée pour la détermination de position exacte du véhicule (10), dans lequel au moins une source de données comprend des informations concernant la topologie de la route, et le nombre de voies de circulation (12) d'au moins le tronçon de route actuellement parcouru est déterminé par les informations concernant la topologie de la route, **caractérisé en ce que** des signaux permettant d'indiquer le sens de circulation sont détectés par l'au moins un autre véhicule (18) dans l'environnement du véhicule (10), par la technologie de capteur d'environnement (14), **et en ce que** la position du véhicule (10) est déterminée par la connaissance de la topologie de la route en liaison avec les signaux détectés pour l'indication du sens de circulation, dans lequel grâce à la connaissance du nombre de voies de changement de direction, sur la base de la connaissance de la topologie de la route, et à la détection des signaux pour l'indication du sens de circulation de l'au moins un autre véhicule (18) dans l'environnement du véhicule (10), on admet qu'un autre véhicule (18), lequel signale l'indication du sens de circulation et se trouve juste avant une intersection, va tourner, de sorte que la position latérale de l'au moins un autre véhicule (18) est identifiée de manière univoque et que, grâce au positionnement relatif des véhicules environnants, leurs voies de circulation sont également attribuées de manière absolue.

2. Procédé selon la revendication 1, dans lequel le véhicule (10) communique avec une infrastructure (20) au moyen d'une communication C2X.

3. Procédé selon l'une des revendications 1 à 2, dans lequel
la technologie de capteur d'environnement (14) fonctionne au moyen d'un radar et/ou d'ultrasons.

4. Procédé selon l'une des revendications 1 à 3, dans lequel
la technologie de capteur d'environnement (14) comprend une technologie de capteur de zone latérale et des informations concernant la position latérale du véhicule (10) sur la voie de circulation (22) sont déterminées au moyen de la technologie de capteur de zone latérale, dans lequel la voie de circulation (12) actuellement empruntée est déterminée à partir de la position latérale.

5. Procédé selon l'une des revendications 1 à 4, dans lequel
la technologie de capteur d'environnement (14) comprend une technologie de capteur avant et la position d'autres véhicules (18) précédents est déterminée par la technologie de capteur avant.

6. Procédé selon l'une des revendications 1 à 5, dans lequel
la technologie de capteur d'environnement (14) comprend une technologie de capteur arrière et la position de véhicules suiveurs est déterminée par la technologie de capteur arrière.

7. Procédé selon l'une des revendications 1 à 6, dans lequel
la position d'une glissière de sécurité (24) est déterminée au moyen de la détection de la caractéristique de rayon de retour d'objets et la position latérale du véhicule (10) sur la voie de circulation (22) est déterminée en fonction de la position de la glissière de sécurité (24).
